# EUROPEAN PATENT SPECIFICATION

(11) **EP 3 524 854 B1**
(45) Date of publication and mention of the grant of the patent: **16.12.2020**
(21) Application number: 19155239.7
(22) Date of filing: 04.02.2019
(51) Int. Cl.: F16H 55/18

(54) **SCISSOR GEAR ASSEMBLY AND INTERNAL COMBUSTION ENGINE PROVIDED WITH THE SCISSOR GEAR ASSEMBLY**
SCHERENGETRIEBEANORDNUNG UND MIT DER SCHERENGETRIEBEANORDNUNG AUSGESTATTETER VERBRENNUNGSMOTOR
ENSEMBLE D'ENGRENAGE EN CISEAUX ET MOTEUR À COMBUSTION INTERNE DOTÉ DE L'ENSEMBLE D'ENGRENAGE EN CISEAUX

(30) Priority: 07.02.2018 NL 2020399
(43) Date of publication of application: 14.08.2019
(73) Proprietor: VCST Industrial Products BVBA, 3800 Sint-Truiden (BE)
(72) Inventor: Lieshout, van, Steven, 2440 Geel (BE)
(74) Representative: Verhees, Godefridus Josephus Maria

(56) References cited:
- EP-A1- 2 894 374
- EP-A2- 0 748 955
- WO-A1-2015/040216
- US-A- 3 385 126

## Description

### Technical filed of the invention

The invention relates to a scissor gear assembly comprising:
- a main gear provided with main teeth (over its entire circumference) having a top radius and a foot radius;
- an auxiliary gear being concentric to the main gear and being in axial direction near the main gear, said auxiliary gear being provided with auxiliary teeth having a top radius and a foot radius; and
- at least one resilient element in between both gears and having two ends, one of them being in contact with the main gear and the other with the auxiliary gear.

### Background of the invention

Scissor gears are known for example from EP 2 894 374 A1.

A scissor gear assembly is well known in the industry and often used in combustion engines for driving cam shafts, balancer shafts, fuel injection pumps or air compressors to prevent rattling noise because of load reversals and/or crank torsion vibrations. The scissor gear comprises a main and an auxiliary gear rotatable on a mutual axis and in rotation direction connected by a resilient member. The resilient member can be a spring with an annular shape, a torsion spring, or one or multiple compression springs. Preferably the spring is selected in this way that the negative torque due to load reversals and crank vibrations are eliminated. The scissor gear assembly has contact with both the driving flank and coast flank of its mating gear and because of this rattling is prevented. Especially the rattling noise at low rpm for instance at idling is noticeable and not wanted.

A disadvantage of using a scissor gear is that the constant load introduced by the spring, and the introduction of an additional gear mesh will increase the level of high frequent noise (other than rattling noise). The high frequent noise has in most cases a first, second or third teeth order frequency of the engine speed. This due to repetition of a tooth-to-tooth pitch error or a repetition of a small tooth-to-tooth flank deviation that will give a repetition of a first, second or third order transmission error (change of speed). Especially for a scissor gear where the constant spring load is forcing both flanks of the gear assembly in contact and where rattling noise is not masking the high frequent noise, this is critical for noise, vibration, and harshness assessment.

A further disadvantage is that because of the friction between the main and the auxiliary gear the hysteresis of the resilient member and the extra tooth friction of the complementary gear mesh will give also energy losses.

### Summary of the invention

An object of the invention is to reduce the high frequent noise and reduce efficiency loss when introducing a scissor gear and still eliminate the backlash. To this end the scissor gear assembly according to the invention is characterized in that at least one part of the circumference of the auxiliary gear has a circumferential radius being equal to or smaller than the foot radius of the main gear and the remaining part of the circumference of the auxiliary gear being provided with the auxiliary teeth and has a top radius greater than the foot radius of the main gear.

Preferably, said at least one part of the auxiliary gear is not provided with teeth, so that the auxiliary gear rim is not fully circumferentially closed. The toothed part preferably has the shape of a circle sector.

For some applications for instance for a one stage air compressor gear drive or a four cylinder combustion engine balancer gear drive the load reversals take only place once per revolution. In these applications the position of the load reversals in the gear train is exactly known. For instance for a four cylinder combustion engine the balancer speed is twice the crank shaft speed. During two rotations of the crank shaft there will be four times ignition which is giving a positive torque, so two times per revolution of the crank shaft and one time per revolution of the balancer shaft. The positive torque takes place in approximately 108° area of a full rotation of the balancer gear. This means the gear mesh driving the balancer shaft will change two times from tooth flank side during one rotation when the torque is changing from negative to positive and from positive to negative again.

For these kind of gear transmission the spring load on the main and auxiliary gears needs only to occur at the area of load reversals so no extra high frequent noise is generated and no extra energy is lost during the time the load reversals will not occur. By elimination of the spring load over the gear mesh during the time the gear mesh will have no load reversals the repetition of the high frequent transmission error would be broken and the high frequent noise could be reduced. Also the efficiency of the gear transmission would be improved because of less friction lost.

The resilient element of the scissor gear assembly according to the present invention being in between and in contact with the main gear and the auxiliary gear. Preferably one end of said resilient element is connected to the main gear and the other end is connected to the auxiliary gear, so that the main and auxiliary gears are connected to each other in a rotational direction.

The resilient element is preloaded in the assembly. The relative rotational freedom of the loaded main gear and the auxiliary gear is limited by an end position member. This end position member preferably is a stop surface on the main gear abutting a cooperating stop surface on the auxiliary gear. This way the preload of the resilient element is kept even when the scissor gear assembly is not in mesh with a counter gear.

The auxiliary gear has a segmented gear tooth rim with only a row of teeth in the area where the gear mesh will go through the backlash. The teeth of the main gear and the row teeth of the auxiliary gear have a small rotational offset defined by the end position member. If the auxiliary gear tooth row is not in mesh with the meshing gear, the spring force between the auxiliary gear and the main gear is transferred over the end position member. During rotation when the first tooth of the row teeth on the auxiliary gear will come in contact, the gear gap between the auxiliary gear and the main gear will be forced to open and the end position member will lose contact. The resilient member will transfer the spring load from the main gear via the gear in mesh back to the auxiliary gear and via the auxiliary gear back to the main gear. During further rotation while the auxiliary gear teeth row is still in mesh, the load reversal(s) should occur. When the load reversal(s) of the transmission has been occurred the gear mesh with the row of tooth can end and when the last tooth of the row has lost contact with the gear in mesh the spring load will be transferred directly from the main gear to the auxiliary gear over the end position member.

Preferably the first couple of teeth and the last couple of teeth of the teeth row have a gradually changing pitch distance so the tooth gap of the scissor gear assembly is gradually becoming bigger and smaller again. This to make the impact of the first couple and last couple of gear teeth smaller and divide the rotational offset when the gear is not in mesh, gradually over more than one tooth. For instance the rotational offset can be divided over the first and last three teeth of the gear row so the impact of the first tooth coming into mesh and the end position member is coming in contact again will be smaller.

Alternatively if the reduction of the rotational offset cannot be divided over more teeth and the impact noise of the stopping member is still noticeable, the impact can be further reduced by a local damping element forming the end stop member. This can be performed by coating the stop surfaces on the main gear and/or on the auxiliary gear or providing an additional component from a damping material (polymer/rubber).

While the auxiliary gear does not need teeth over the fully circumferential area, the design can be simplified. The auxiliary gear can be executed as a circle segment or a number of segments when more rows of gear teeth are necessary. Unnecessary material can be removed. This way a more cost effective design can be created.

A further embodiment of the scissor gear assembly according to the invention is characterized in that the main gear is provided with a recess in an axial end surface of the main gear, said recess having a depth smaller than the width of the main gear, wherein the auxiliary gear being present in said recess. The recess preferably has the shape of a sector. The width of the auxiliary gear is preferably equal to or smaller than the depth (width) of the recess, so that the auxiliary gear is fully inside the recess. Thus the segmented gear can be within the main gear width so that no additional width is necessary to implement a scissor gear assembly. Especially for internal combustion engines timing gears this is beneficial because this will reduce complete engine size and further reduce engine total cost and in case for passenger cars engine compartment space.

The invention further relates to an internal combustion engine having a crank shaft and at least one of the following parts: a timed balancer shaft, a timed air compressor and a fuel pump. Said engine further having a gear train connecting the crank shaft with the at least one of said parts, said gear train comprising gears and at least one scissor gear assembly according to the invention as described above.

### Brief description of the drawings

The invention will be further elucidated below on the basis of drawings. These drawings show embodiments of the scissor gear assembly according to the present invention. In the drawings:
Figure 1 is an exploded view of a first embodiment of the scissor gear assembly according to the invention;
Figure 2 is a front view of the scissor gear assembly of Fig. 1 in assembled situation;
Figure 3 is a back view of the scissor gear assembly of Fig. 1;
Figure 4 is a side view of the scissor gear assembly of Fig. 1;
Figure 5 is the scissor gear assembly of Fig. 1 being in mesh with a counter gear;
Figure 6 is an exploded view of a second embodiment of the scissor gear assembly according to the invention;
Figure 7 is a front view of the scissor gear assembly of Fig. 6 in assembled situation;
Figure 8 is a back view of the scissor gear assembly of Fig. 6;
Figure 9 is a side view of the scissor gear assembly of Fig. 6;
Figure 10 is a part of an engine having a gear train provided with a scissor gear assembly according to the invention; and
Figure 11 is a graph of the acceleration of the crank shaft over the revolution of the crank shaft.

### Detailed description of the drawings

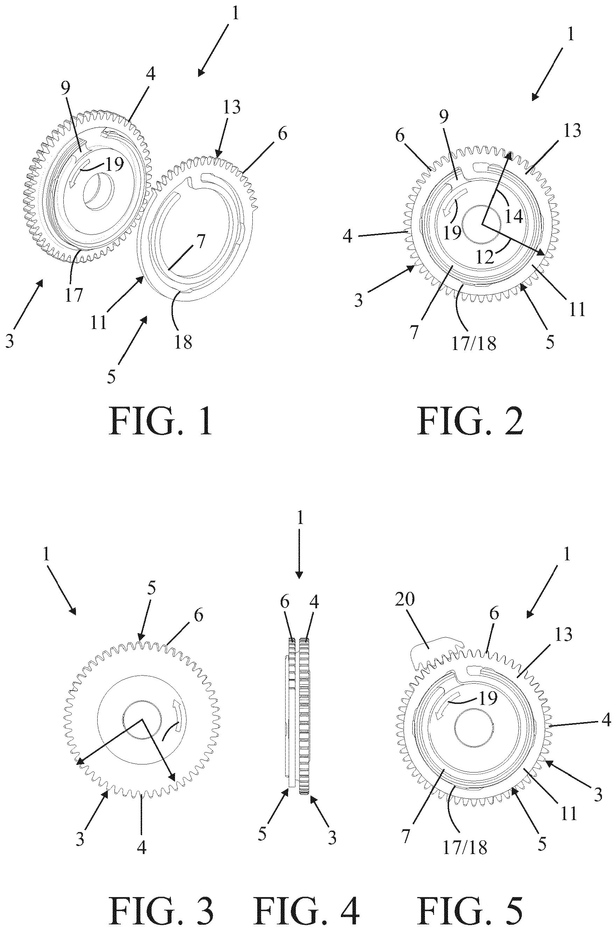

In figures 1 to 4 a first embodiment of the scissor gear assembly according to the invention is shown in different views. The scissor gear assembly 1 has a main gear 3 provided with main teeth 4 over its entire circumference and an auxiliary gear 5 being concentric to the main gear and being in axial direction near the main gear. The auxiliary gear being provided with auxiliary teeth 6. The scissor gear assembly further has a resilient element 7 being integral with the auxiliary gear and being in between both gears. One end of the resilient element is attached to the auxiliary gear and the other end is in contact with the wall of an protrusion 9 on the main gear.

The resilient element is pretensioned such that it acts a force in tangential direction on both gears. To keep the resilient member under pretension while the auxiliary gear tooth are not in mesh with a counter gear, the main and auxiliary gears being provided with stop surfaces 17 and 18 abutting each other and limiting the relative rotation of the gears with respect to each other. Both stop surfaces being coated with a damping layer.

A part 11 of the circumference of the auxiliary gear has no teeth and has a circumferential radius 12 being smaller than the foot radius 15 of the teeth 4 of the main gear. The remaining part 13 of the circumference of the auxiliary gear being provided with the auxiliary teeth 6 and has a top radius 14 equal to the top radius 16 of the teeth 4 of the main gear.

The in rotation direction 19 first few of the teeth 6 of the auxiliary gear 5 have a circular pitch modification such that during rotation the resilient member 7 is gradually tensioned. The circular pitch of the main and auxiliary gears are the same in the middle of the teeth row of the auxiliary gear. However, the circular pitch of the auxiliary gear between the first two teeth in rotation direction are larger than that in the middle of the teeth row of the auxiliary pitch and the circular pitch between the second and third teeth in rotation direction is in between that of the middle part and the first two teeth. The circular pitch between the last three teeth of the teeth row of the auxiliary gear decreases in rotation direction. Because of this circular pitch modification the resilient element tensions gradually and the impact of the stop surfaces is reduced.

Figure 5 shows the scissor gear assembly 1 in mesh with a counter gear 20 (only a small part is shown of this counter gear). The teeth of the main gear are in contact with one of the flanks of the teeth of the counter gear and the teeth of the auxiliary gear are in contact with the other flank of the teeth of the counter gear due to the resilient element which urges the teeth of the main and auxiliary gear away from each other.

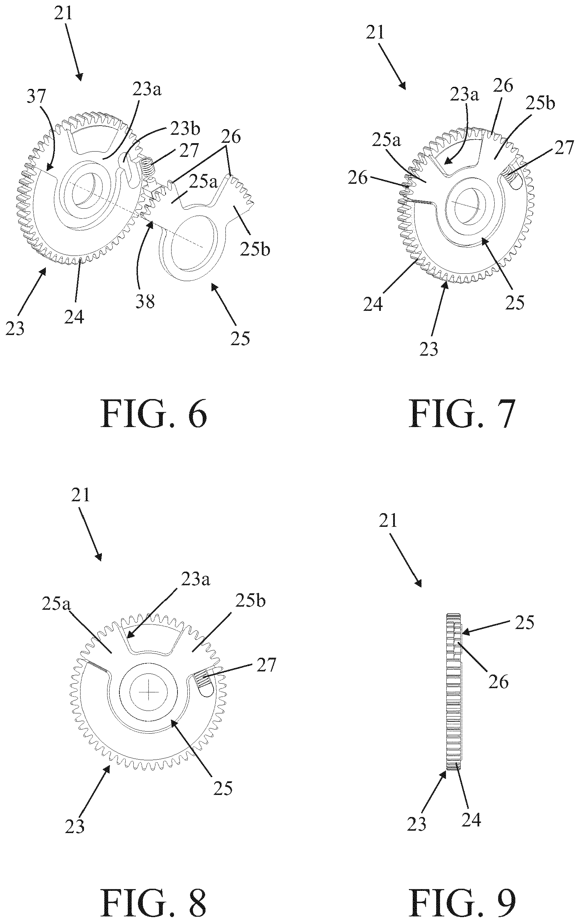

In figures 6 to 9 a second embodiment of the scissor gear assembly according to the invention is shown in different views. In this scissor gear assembly 21 the auxiliary gear 25 has two sectors 25a and 25b provided with auxiliary teeth 26. The main gear 23 is provided with main teeth 24 and has a recess 23a in an axial end surface. The auxiliary gear is accommodated in this recess in the main gear. The recess has a depth smaller than the width of the main gear. This depth is equal to the width of the auxiliary gear so that no additional width is necessary to implement a scissor gear assembly.

The resilient element of this scissor gear assembly 21 is embodied by a compression spring 27. This spring is in a hole 23b in the main gear and is with one end in contact with an end wall of this hole and with the other end in contact with a bounding wall of one of the sectors 25b. The main and auxiliary gears being provided with stop surfaces 37 and 38 abutting each other and limiting the relative rotation of the gears with respect to each other

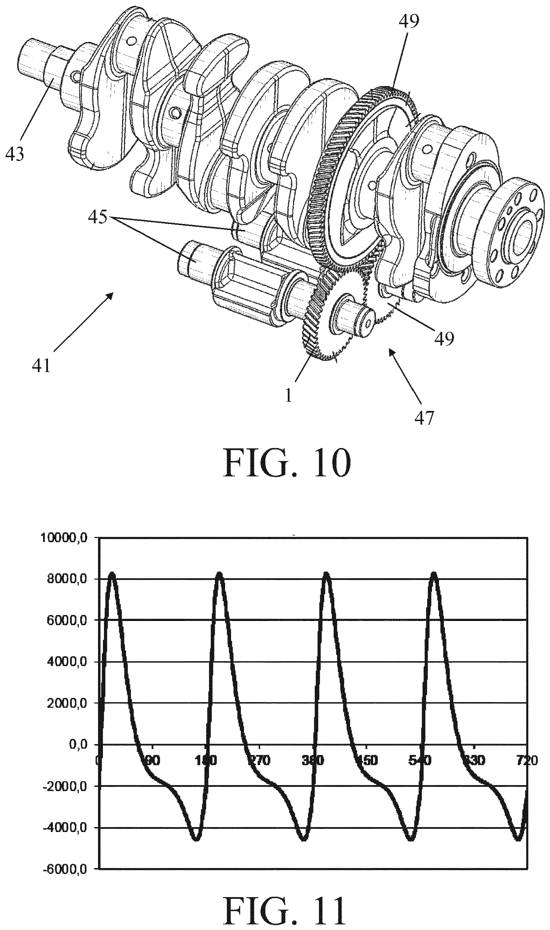

In Fig. 10 parts of an internal combustion engine are shown. The internal combustion engine 41 has a crank shaft 43, two timed balancer shafts 45 and a gear train 47 connecting the crank shaft with the balancer shafts. The gear train consists of two gears 49 and the scissor gear assembly 1. One of the gears is connected to a crank shaft and the other gear is connected to one of the balances shafts. The scissor gear assembly is connected to the other balance shaft and is present between the two gears.

Fig. 11 shows a graph of the acceleration of the crank shaft (in rad/s² on the vertical axis) over two full revolutions (the angle of the crank shaft is on the horizontal axis) of a 4-cylinder diesel engine. In one revolution of the crank shaft four backlashes take place (four times the direction of acceleration changes). The balancer shaft rotate two times as fast as the crank shaft and during one revolution of the balancer shaft two backlashes occur. Because the parts in which the acceleration is positive (in these parts the crank shaft is driven) are small, only these regions of the auxiliary gear have to be provided with teeth. This can be realized with one segment (first embodiment shown) or two small segments at distance from each other (second embodiment).

Although the invention has been described in the foregoing based on the drawings, it should be observed that the invention is not by any manner or means restricted to the embodiment shown in the drawings. The invention also extends to all embodiments deviating from the embodiment shown in the drawings within the scope defined by the claims. The resilient element can also be connected to the main gear with one end and to the auxiliary gear with the other end, so that the main and auxiliary gears are connected to each other in a rotational direction.

## Claims

1. A scissor gear assembly (1; 21) comprising:
- a main gear (3; 23) provided with main teeth (4; 24) having a top radius (16) and a foot radius (15);
- an auxiliary gear (5; 25) being concentric to the main gear and being in axial direction near the main gear, said auxiliary gear being provided with auxiliary teeth (6; 26) having a top radius (14) and a foot radius (12); and
- at least one resilient element (7; 27) in between both gears and having two ends (7a, 7b), one of them being in contact with the main gear and the other with the auxiliary gear,
**characterized in that** at least one part (11) of a circumference of the auxiliary gear (5; 25) has a circumferential radius being equal to or smaller than the foot radius (15) of the main gear (3; 23) and the remaining part (13) of the circumference of the auxiliary gear being provided with the auxiliary teeth (6; 26) and has a top radius (14) greater than the foot radius (15) of the main gear.

2. The scissor gear assembly (1; 21) according to claim 1, **characterized in that** said main and auxiliary gears (3, 5; 23, 25) being provided with stop surfaces (17, 18; 37, 38) abutting each other and limiting the relative rotation of the gears with respect to each other, wherein said resilient element (7; 27) being pretensioned such that it acts a force in tangential direction on both gears.

3. Scissor gear assembly according to claim 2, **characterized in that** at least one of said stop surfaces being provided with a damping member.

4. The scissor gear assembly according to any one of the preceding claims, **characterized in that** said resilient element with one end is connected to the main gear and with the other end is connected to the auxiliary gear, so that the main and auxiliary gears are connected to each other in a rotational direction.

5. The scissor gear assembly (1; 21) according to any one of the preceding claims, **characterized in that** said at least one part (11) of the auxiliary gear (5; 25) is not provided with teeth.

6. Scissor gear assembly (1) according to claim 5, **characterized in that** the teeth (6) of the auxiliary gear (5) have a circular pitch modification such that during rotation the resilient member (7) is gradually tensioned.

7. Scissor gear assembly (1) according to claim 5 or 6, **characterized in that** in rotation direction (19) the last few teeth of the auxiliary gear (5) have a circular pitch modification so that the impact of the stop surfaces (17,18) is reduced.

8. Scissor gear assembly (21) according to any one of the preceding claims, **characterized in that** the main gear (23) is provided with a recess (23a) in an axial end surface of the main gear, said recess having a depth smaller than the width of the main gear, wherein the auxiliary gear (25) being present in said recess.

9. An internal combustion engine (41) having a crank shaft (43) and at least one of the following parts: a timed balancer shaft (45), a timed air compressor and a fuel pump, said engine further having a gear train (47) connecting the crank shaft with the at least one of said parts, said gear train comprising gears (49) and at least one scissor gear assembly (1) according to one of the preceding claims.

## Patentansprüche

1. Scherenzahnradanordnung (1; 21), umfassend:
- ein Hauptzahnrad (3; 23), das mit Hauptzähnen (4; 24) mit einem oberen Radius (16) und einem Fußradius (15) versehen ist;
- ein Hilfszahnrad (5; 25), das konzentrisch zum Hauptzahnrad ist und sich in axialer Richtung nahe dem Hauptzahnrad befindet, wobei das Hilfszahnrad mit Hilfszähnen (6; 26) mit einen oberen Radius (14) und einen Fußradius (12) versehen ist; und
- mindestens ein elastisches Element (7; 27) zwischen beiden Zahnrädern und mit zwei Enden (7a, 7b), von denen eines mit dem Hauptzahnrad und das andere mit dem Hilfszahnrad in Kontakt steht;
**dadurch gekennzeichnet, dass** mindestens ein Teil (11) eines Umfangs des Hilfszahnrads (5; 25) einen Umfangsradius aufweist, der gleich oder kleiner als der Fußradius (15) des Hauptzahnrads (3; 23) ist, und der verbleibende Teil (13) des Umfangs des Hilfszahnrads mit den Hilfszähnen (6; 26) versehen ist und einen oberen Radius (14) hat, der größer als der Fußradius (15) des Hauptzahnrads ist.

2. Scherenzahnradanordnung (1; 21) nach Anspruch 1, **dadurch gekennzeichnet, dass** das Haupt- und das Hilfszahnrad (3, 5; 23, 25) mit aneinander angrenzenden Anschlagflächen (17, 18; 37, 38) versehen sind und der relativen Drehung der Zahnräder in Bezug aufeinander begrenzen, wobei das elastische Element (7; 27) vorgespannt ist, so dass es eine Kraft in tangentialer Richtung auf beide Zahnräder ausübt.

3. Scherenzahnradanordnung nach Anspruch 2, **dadurch gekennzeichnet, dass** mindestens eine der Anschlagflächen mit einem Dämpfungselement versehen ist.

4. Scherenzahnradanordnung nach einem der vorhergehenden Ansprüche, **dadurch gekennzeichnet, dass** das elastische Element mit einem Ende mit dem Hauptzahnrad und mit dem anderen Ende mit dem Hilfszahnrad verbunden ist, so dass das Haupt- und das Hilfszahnrad in Drehrichtung miteinander verbunden sind.

5. Scherenzahnradanordnung (1; 21) nach einem der vorhergehenden Ansprüche, **dadurch gekennzeichnet, dass** mindestens ein Teil (11) des Hilfszahnrads (5; 25) nicht mit Zähnen versehen ist.

6. Scherenradanordnung (1) nach Anspruch 5, **dadurch gekennzeichnet, dass** die Zähne (6) des Hilfszahnrads (5) eine kreisförmige Steigungsmodifikation aufweisen, so dass während der Drehung das elastische Element (7) allmählich gespannt wird.

7. Scherenzahnradanordnung (1) nach Anspruch 5 oder 6, **dadurch gekennzeichnet, dass** in Drehrichtung (19) die letzten Zähne des Hilfszahnrads (5) eine kreisförmige Steigungsmodifikation aufweisen, so dass der Aufprall der Anschlagflächen (17, 18) reduziert wird.

8. Scherenzahnradanordnung (21) nach einem der vorhergehenden Ansprüche, **dadurch gekennzeichnet, dass** das Hauptzahnrad (23) mit einer Aussparung (23a) in einer axialen Endfläche des Hauptzahnrads versehen ist, wobei die Aussparung eine geringere Tiefe aufweist als die Breite des Hauptzahnrads, wobei das Hilfszahnrad (25) in der Aussparung vorhanden ist.

9. Verbrennungsmotor (41) mit einer Kurbelwelle (43) und mindestens einem der folgenden Teile: einer zeitgesteuerten Ausgleichswelle (45), einem zeitgesteuerten Luftkompressor und einer Kraftstoffpumpe, wobei der Verbrennungsmotor ferner einen Getriebezug (47) umfasst der, der Kurbelwelle mit dem mindestens einen der Teile verbindet, wobei der Getriebezug Zahnräder (49) und mindestens eine Scherenzahnradanordnung (1) gemäß einem der vorhergehenden Ansprüche umfasst.

## Revendications

1. Ensemble d'engrenage à ciseaux (1; 21) comprenant:
- un engrenage principal (3; 23) pourvu de dents principales (4; 24) ayant un rayon supérieur (16) et un rayon de pied (15);
- un engrenage auxiliaire (5; 25) étant concentrique à l'engrenage principal et étant en direction axiale à proximité de l'engrenage principal, ledit engrenage auxiliaire étant pourvu de dents auxiliaires (6; 26) ayant un rayon supérieur (14) et un rayon de pied (12); et
- au moins un élément élastique (7; 27) entre les deux engrenages et ayant deux extrémités (7a, 7b), l'une d'elles étant en contact avec l'engrenage principal et l'autre avec l'engrenage auxiliaire,
**caractérisé en ce qu'**au moins une partie (11) d'une circonférence de l'engrenage auxiliaire (5; 25) a un rayon circonférentiel égal ou inférieur au rayon du pied (15) de l'engrenage principal (3; 23) et du rayon restant une partie (13) de la circonférence de l'engrenage auxiliaire étant pourvue des dents auxiliaires (6; 26) et a un rayon supérieur (14) supérieur au rayon de pied (15) de l'engrenage principal.

2. Ensemble d'engrenage à ciseaux (1; 21) selon la revendication 1, **caractérisé en ce que** lesdits engrenages principal et auxiliaire (3, 5; 23, 25) sont pourvus de surfaces d'arrêt (17, 18; 37, 38) en butée l'une contre l'autre et limiter la rotation relative des engrenages l'un par rapport à l'autre, dans lequel ledit élément élastique (7; 27) étant précontraint de telle sorte qu'il exerce une force dans la direction tangentielle sur les deux engrenages.

3. Ensemble d'engrenage à ciseaux selon la revendication 2, **caractérisé en ce qu'**au moins une desdites surfaces de butée est pourvue d'un organe amortisseur.

4. Ensemble d'engrenage à ciseaux selon l'une quelconque des revendications précédentes, **caractérisé en ce que** ledit élément élastique à une extrémité est relié à l'engrenage principal et à l'autre extrémité est relié à l'engrenage auxiliaire, de sorte que les engrenages principal et auxiliaire sont connectés les uns aux autres dans un sens de rotation.

5. Ensemble d'engrenage à ciseaux (1; 21) selon l'une quelconque des revendications précédentes, **caractérisé en ce que** ladite au moins une partie (11) de l'engrenage auxiliaire (5; 25) n'est pas pourvue de dents.

6. Ensemble d'engrenage à ciseaux (1) selon la revendication 5, **caractérisé en ce que** les dents (6) de l'engrenage auxiliaire (5) présentent une modification de pas circulaire de telle sorte que lors de la rotation l'organe élastique (7) est progressivement tendu.

7. Ensemble d'engrenage à ciseaux (1) selon la revendication 5 ou 6, **caractérisé en ce que** dans le sens de rotation (19) les dernières dents de l'engrenage auxiliaire (5) présentent une modification de pas circulaire de sorte que l'impact des surfaces de butée (17, 18) est réduite.

8. Ensemble d'engrenage à ciseaux (21) selon l'une quelconque des revendications précédentes, **caractérisé en ce que** l'engrenage principal (23) est pourvu d'un évidement (23a) dans une surface d'extrémité axiale de l'engrenage principal, ledit évidement ayant une profondeur plus petite. que la largeur de l'engrenage principal, l'engrenage auxiliaire (25) étant présent dans ledit évidement.

9. Moteur à combustion interne (41) comportant un vilebrequin (43) et au moins l'une des pièces suivantes: un arbre d'équilibrage temporisé (45), un compresseur d'air temporisé et une pompe à carburant, ledit moteur ayant en outre un train d'engrenages (47) reliant le vilebrequin à la au moins une desdites pièces, ledit train d'engrenages comprenant des engrenages (49) et au moins un ensemble d'engrenages à ciseaux (1) selon l'une des revendications précédentes.
